# EUROPÄISCHE PATENTSCHRIFT

(11) **EP 3 645 698 B1**
(45) Veröffentlichungstag und Bekanntmachung des Hinweises auf die Patenterteilung: **11.05.2022**
(21) Anmeldenummer: 18734798.4
(22) Anmeldetag: 27.06.2018
(51) Int. Cl.: C12C 7/26, C12C 11/00, C12C 11/11, C12C 13/00, F25D 17/00

(54) **SYSTEM ZUR KÜHLUNG EINES BRAUVERFAHRENS**
SYSTEM FOR COOLING A BREWING PROCESS
DISPOSITIF POUR LE REFROIDISSEMENT D'UN PROCÉDÉ DE BRASSAGE

(30) Priorität: 30.06.2017 DE 202017103897 U
(43) Veröffentlichungstag der Anmeldung: 06.05.2020
(73) Patentinhaber: Caspary, Rudolf, 83339 Chieming / Hart (DE)
(72) Erfinder: Caspary, Rudolf, 83339 Chieming / Hart (DE)
(74) Vertreter: Kiwit, Benedikt
(86) Internationale Anmeldenummer: PCT/EP2018/067187
(87) Internationale Veröffentlichungsnummer: WO 2019/002339

(56) Entgegenhaltungen:
- DE-A1-102007 028 329
- DE-A1-102013 200 473
- DE-U- 1 939 115
- DE-U1-202016 000 870
- GB-A- 2 528 525

## Beschreibung

Die vorliegende Erfindung betrifft eine Brauvorrichtung zum Gären eines flüssigen Braustoffes, aufweisend einen Flüssigkeitstank und ein Kühlaggregat. Die Erfindung betrifft ferner ein Brausystem zum Gären eines Braustoffes mit wenigstens zwei der erfindungsgemäßen Brauvorrichtungen.

Als Brauverfahren werden üblicherweise solche Prozesse bezeichnet, welche zur Herstellung von Bier oder anderen vergärbaren Flüssigkeiten dienen. Im Speziellen in Deutschland werden zum Brauen von Bier dabei Wasser, Malz und Hopfen als Zutaten verwendet. Auf dem Weg zum fertigen Brauprodukt durchlaufen die Zutaten eine Vielzahl unterschiedlicher Prozessschritte.

So wird beispielsweise der Hopfen in einer sogenannten "Würzepfanne" zu den anderen bereits zuvor verarbeiteten Zutaten gegeben und dort für etwa eine Stunde (oder in einzelnen Mengen und Schritten) gekocht. Nach diesem Kochen werden verbliebene Trübstoffe aus der Lösung entfernt, ehe die sogenannte "Würze" im sogenannten "Würzekühler" von einer Temperatur von etwa 95° C auf etwa 6 bis 18°C innerhalb weniger Stunden (zum Beispiel innerhalb einer Stunde) abrupt heruntergekühlt wird.

Zur Erzeugung des Alkoholgehalts und der Kohlensäure in dem Getränk wird dem Gemisch in einem weiteren Prozessschritt Hefe zugesetzt. Die Hefe bewirkt, dass der in dem Gemisch enthaltene Zucker in Alkohol und Kohlensäure unter Abgabe von Energie (beispielsweise in Form von Wärme) umgewandelt wird. Dieser Umwandlungsprozess (Fermentation) wird in der Regel in temperaturkontrollierten Gärbottichen oder Gärtanks durchgeführt und dauert in etwa vier bis acht Tage, ehe das Bier eingelagert werden kann. Je nach Art der verwendeten Hefe müssen während des Gärprozesses bestimmte Temperaturen eingehalten werden, um die Umwandlung zu begünstigen und gezielt (beispielsweise durch die Wirkung von Enzymen) bestimmte Stoffe zu erhalten. So sind für die sogenannten "obergärigen Hefen" Prozesstemperaturen von etwa 15° C bis 28° C zu bevorzugen, während die sogenannten "untergärige Hefen" bevorzugt bei Temperaturen von 6° C bis 10° C eingesetzt werden.

Aus dem Stand der Technik ist es bekannt, die für die Durchführung des Brauverfahrens notwendige Kühlung, beispielsweise für die Würzekühlung, den Gärprozess und die Lagerung, durch ein zentrales Kühlsystem bereitzustellen.

Solche Kühlsysteme verwenden oftmals einen Kälteträger, wie zum Beispiel Wasser, ein Glykol-Wasser-Gemisch oder mit Salzen angereichertes Wasser, sogenannte "Solen", zum Abtransport der Wärme von der Kühlstelle. Der Kälteträger wird dazu in einem eigenen Pumpenkreislauf umgewälzt. Anschließend wird die aufgenommene Wärme durch eine Kältemaschine aus dem Kälteträger entfernt. Die Kühlung der Kühlstelle erfolgt somit auf indirekte Weise, da die Kältemaschine nicht direkt auf die Kühlstelle wirkt. Um auf Lastspitzen beim Kälteverbrauch besser reagieren zu können, werden solche Kühlsysteme oftmals mit einem Kältespeicher kombiniert, welche insbesondere in lebensmittelerzeugenden Industrien, wie Molkereien und Brauereien, gefunden werden können. Hier besteht oft während bestimmter Prozessschritte für wenige Stunden ein hoher Kühlbedarf verglichen zu dem Großteil der verbleibenden Prozessschritte. Als Beispiel für einen solchen Prozessschritt mit hohem Kühlbedarf kann die vorgenannte Würzekühlung in Brauereien genannt werden.

GB 2 528 525 A offenbart eine Kontrollvorrichtung zum Steuern der Temperatur in einer Vielzahl von Tanks. Dabei weist jeder Tank einen Wärmetauscher auf, der mittels Zu- und Abführleitungen mit einer Wasser-Glykol-Mischung als Kälteträger gespeist wird. Der abgeleitete Kälteträger wird über einen zentralen Kühler gekühlt. Die Versorgung und die Rückführung der Wasser-Glykol-Mischung erfolgt zentral über die Kontrollvorrichtung, welche einen entsprechenden Rohrbündler und Leitungsverteiler mit steuer- und regelbaren Ventilen aufweist. Die Offenlegungsschrift DE202013200473 offenbart eine Vorrichtung zur Kühlung eines Gär- und/oder Lagertanks, die einen Wärmeüberträger, der dazu ausgebildet ist, Wärme von dem Gär- und/oder Lagertank auf ein Kühlmittel zu übertragen, und eine Kälteanlage umfasst.

Des Weiteren sind in der Kältetechnik aber auch direkte Kühlverfahren bekannt, wie sie beispielsweise in haushaltsüblichen Kühlschränken verwendet werden. In derartigen Verfahren wird beispielsweise an der Kühlstelle ein flüssiges Kältemittel, wie beispielsweise Ammoniak, durch Aufnahme von Wärme als Gas verdampft. Daran anschließend wird dieses komprimiert und verflüssigt, ehe es sich (beispielsweise entsprechend dem Boyle-Mariotteschen Gesetz) durch eine nachgeschaltete Drossel bei gleichzeitiger Entspannung abkühlt und Wärme aufnehmen kann. Derzeit erhältliche Kühlmittel besitzen oft problematische Eigenschaften und sind in der Anschaffung mit höheren Kosten verbunden als vergleichbare Kälteträger. Daher sind direkte Kühlverfahren auch weniger gebräuchlich in Großanlagen und insbesondere in der lebensmittelerzeugenden Industrie (wie beispielsweise Molkereien). Hingegen sind vor allem in Kleinkälteanlagen, wie zum Beispiel bei einem Kühlschrank oder bei der Kühlraumkühlung in der Gastronomie, Kühlvorrichtungen im Einsatz, die beispielsweise mittels Frigen oder Freon als Kältemittel betrieben werden.

Wie bereits zuvor erwähnt, werden in Brauverfahren üblicherweise indirekte Kühlverfahren mittels eines zentralen Kühlsystems mit Kältespeichern realisiert.

Häufig haben indirekte Kühlverfahren eine niedrige Energieeffizienz als direkte Kühlverfahren. Dies resultiert unter anderem daraus, dass bei indirekten Kühlverfahren oftmals eine geringere Temperaturdifferenz zwischen der Kühlstelle und dem Kühlmedium vorliegt sowie eine Wärmeübertragung an zwei Stellen stattfindet. Hingegen gibt es bei direkten Kühlverfahren lediglich einen Wärmeübergang.

Hinzukommt, dass bei solchen Kühlsystemen zusätzliche Energie für den Kältespeicher und den Betrieb anderer erforderlicher Apparate, wie im Folgenden ausgeführt, benötigt wird.

So ist beispielsweise eine Pumpe zum Umwälzen des Kälteträgers erforderlich, die betrieben werden muss und permanent am Laufen gehalten werden muss. Zudem erfordert ein zentrales Kühlsystem oftmals eine von den anderen Anlagen räumlich getrennte Anordnung, wie beispielsweise in Maschinenhäusern, um so beispielsweise Lärm und Hitze von den restlichen Gebäudeteilen fernzuhalten. Dadurch ergeben sich teilweise sehr lange (Rohr-)Leitungen von der zentralen Kühlung zu den jeweiligen Kühlstellen, wodurch die Energieeffizienz durch Isolations- und Druckverluste der Leitungen weiter verschlechtert wird. Ferner wird die Wärmeaufnahmefähigkeit des Kälteträgers durch die auftretenden Transportwiderstände in den Leitungen weiter verringert, da durch die Leitungswiderstände Wärme erzeugt wird, die zumindest teilweise von dem Kälteträger aufgenommen wird. Zentrale Kühlsysteme haben sich dennoch insbesondere in Brauereien durchgesetzt, da sie eine definierte Kühlung und beliebig verzweigte Leitung zu den oft räumlich getrennt vorgesehenen Kühlstellen ermöglichen.

Die Kühlkapazität eines zentralen Kühlsystems wird oftmals durch einen in der Vergangenheit vorliegenden Kältebedarf bestimmt. Dies hat unter anderem zur Folge, dass Überkapazitäten entstehen, da das für Lastspitzen angemessen ausgelegte Kühlsystem dann oft für den Normalbetrieb überdimensioniert ist. Darüber hinaus kann eine solche Anlage nicht ohne größere Änderungen an dem existierenden Kühlsystem erweitert werden, wenn beispielsweise eine Erhöhung der Produktion durchgeführt werden soll. Oft wird dann ein Austausch des kompletten Kühlsystems erforderlich. Ferner ist durch ein zentrales Kühlsystem das Risiko von Produktionsausfällen im Wartungs- oder Reparaturfall erhöht, da keine Ausweichsysteme zur Verfügung stehen.

Es ist daher eine Aufgabe der vorliegenden Erfindung eine montagefreundliche Vorrichtung und ein System für eine energieeffiziente Kühlung während eines Brauverfahrens bereitzustellen. Das System soll dabei flexibel erweiterbar oder verkleinerbar sein, um so auf Kapazitätsanpassungen bei der Produktion, beispielsweise aufgrund veränderter Auftragslage, oder das Hinzukommen neuer Anlagenkomponenten reagieren zu können. Dabei ist nicht nur auf eine platzsparende Erweiterung, sondern auch auf eine einfache Montage und Wartung des Systems zu achten.

Diese Aufgabe wird durch den Gegenstand der unabhängigen Ansprüche gelöst. Die abhängigen Ansprüche bilden den zentralen Gedanken der vorliegenden Erfindung in besonders vorteilhafter Weise weiter.

Die Erfindung betrifft eine Brauvorrichtung zum Gären eines flüssigen Braustoffes. Diese weist einen Flüssigkeitstank auf, in dem ein flüssiger Braustoff aufgenommen wird. Bei dem Flüssigkeitstank kann es sich im Besonderen um einen Gärtank oder Lagertank handeln. Zudem weist die Brauvorrichtung ferner eine Kühlvorrichtung auf, mit der die Kühlung des flüssigen Braustoffes bereitgestellt wird. Die Kühlvorrichtung verfügt hierfür über ein Kühlaggregat zum Kühlen eines Kältemittels sowie über einen Durchlaufkühler, welcher mittels des gekühlten Kältemittels den flüssigen Braustoff in dem Flüssigkeitstank kühlt. Ferner weist die Kühlvorrichtung Kältemittelleitungen auf, die eine Eingangsleitung, eine Ausgangsleitung und eine Kälteleitung umfassen.

Gemäß der Erfindung wird dabei unter einer Leitung eine Vorrichtung zum Führen und Transportieren eines Mediums, wie zum Beispiel ein Kältemittel, verstanden. Eine Leitung kann beispielsweise ein einzelnes Rohr oder ein Schlauch sein, aber auch der Verbund mehrerer aneinander angeschlossener Rohre und/oder Schläuche.

Ferner wird dabei gemäß der Erfindung unter einem Durchlaufkühler ein Apparat oder eine Vorrichtung verstanden, der/die dazu eingerichtet ist, einen Teil der thermischen Energie des flüssigen Braustoffes direkt (d.h. ohne Einflussnahme weiterer Apparate oder Vorrichtungen) an das dieses Bauteil durchströmende, wärmeaufnahmefähige Kältemittel zu übertragen.

Zudem wird dabei gemäß der Erfindung unter einem Kühlaggregat ein Apparat oder eine Vorrichtung verstanden, der/die wenigstens dazu eingerichtet ist, die Wärmeaufnahmefähigkeit des Kältemittels wiederherzustellen.

Die Eingangsleitung besitzt im Besonderen einen ersten Anschlussabschnitt zum Anschließen einer Leitung zum Leiten von Kältemittel in das Kühlaggregat. Die Ausgangsleitung weist einen zweiten Anschlussabschnitt zum Anschließen einer Leitung zum Abführen des Kältemittels von dem Durchlaufkühler auf. Mit der Kälteleitung wird das gekühlte Kältemittel vom Kühlaggregat zum Durchlaufkühler geleitet, an dessen stromabwärtigen Ende wiederum bevorzugt die Ausgangsleitung vorgesehen ist. Der Flüssigkeitstank und die Kühlvorrichtung werden dabei als eine zusammenhängende, transportable Einheit bereitgestellt.

Gemäß der Erfindung wird dabei unter einem Anschlussabschnitt der Abschnitt einer Leitung verstanden, an dem die Leitung mit einer anderen Leitung verbunden werden kann, beispielsweise durch einen entsprechend ausgelegten Leitungsabschnitt, ein Verbindungsteil wie eine Schnellkupplung oder auf andere Weise.

Gemäß der Erfindung wird dabei unter einer zusammenhängenden, transportablen Einheit verstanden, dass die besagten Komponenten (Flüssigkeitstank und Kühlvorrichtung) werksseitig bereits betriebsfertig als eine Einheit montiert und vor Ort mit minimalem Aufwand (bspw. Verbinden der Anschlussabschnitte mittels entsprechender Leitungen) einfach in Betrieb genommen werden kann. In seiner einfachsten Ausführung kann beispielsweise die Ausgangsleitung direkt mit der Eingangsleitung verbunden werden und somit die Brauvorrichtung komplett betriebsfertig versandt werden. Beispielsweise ist die gesamte Brauvorrichtung derart dimensioniert, dass sie betriebsfertig montiert und bevorzugt in standardisierten Transportvorrichtungen, wie bspw. einem ISO-Container, transportiert werden kann.

Ferner wird gemäß der Erfindung unter einer zusammenhängenden, transportablen Einheit auch verstanden, dass die besagten Komponenten zu Transportzwecken gegebenenfalls in Subeinheiten aufgeteilt werden und erst am Betriebsort zu einer zusammenhängenden, transportablen Einheit zusammengesetzt werden. Somit wird gemäß der Erfindung grundsätzlich eine direkte physische Verbindung der jeweiligen Komponenten, das heißt eine direkte physische Verbindung zwischen dem Flüssigkeitstank und der Kühlvorrichtung, wenigstens nach Inbetriebnahme und insbesondere während des Betriebs vorausgesetzt. Dabei wird unter einer direkten physischen Verbindung eine relativ zueinander fixe Kopplung der beiden Komponenten miteinander verstanden. Das bedeutet, dass beispielsweise bei einem Bewegen einer der beiden Komponenten die andere Komponente ebenfalls mitbewegt werden würde.

Dadurch wird es möglich, eine Brauvorrichtung als eine Einheit zur Verfügung zu stellen, die einfach transportiert und bewegt werden kann. Die Brauvorrichtung enthält dabei bereits die für den Gär- und Lagerprozess wichtigsten Bauteile. Die einzelnen Bauteile sind durch die Kältemittelleitungen miteinander gekoppelt, wodurch die Leitungslänge der einzelnen Kältemittelleitungen reduziert werden kann. Somit können auftretende Leitungsverluste des Kältemittels, wie Druck- und Energieverluste, minimiert werden. Ferner wird weniger Isoliermaterial an den Kältemittelleitungen benötigt. Hinzu kommt, dass während des gesamten Transports des beispielsweise gasförmigen Kältemittels (also beispielsweise bei einem handelsüblichen Kälteaggregat, wie beispielsweise einen Kühlschrank, das einen Kompressor, einen Kondensator und eine Drossel aufweist, sowohl im gespannten Zustand vor der Drossel als auch im entspannten Zustand nach der Drossel) die Temperaturunterschiede zur Umgebung im Vergleich mit einem indirekten Kühlverfahren mit Kälteträger geringer ausfallen. Der Transport des Kältemittels kann dabei ohne Pumpe erfolgen. Das Kältemittel kann zudem eine im Vergleich zu einem Kälteträger geringere Viskosität besitzen, wodurch insgesamt die zum Transport des Kältemittels notwendige Energie verringert werden kann. Die Anschlussabschnitte an den Kältemittelleitungen erlauben es, die Vorrichtung mit einfachen Mitteln an weitere Leitungen anzuschließen, wodurch der Aufwand für Montage und Inbetriebnahme reduziert werden kann. Damit wird es möglich, eine funktionsfähige Brauvorrichtung an den Bestimmungsort liefern zu können und mit einfachen Mitteln in Betrieb nehmen zu können und wahlweise einfach in ein bereits existierendes Kühlsystem zu integrieren. Als weiterer Vorteil ist zu erwähnen, dass die gesamte Brauvorrichtung vor dem Transport zum Bestimmungsort vollständig überprüft und getestet werden kann, wodurch die Zuverlässigkeit und Qualität der Brauvorrichtung verbessert werden kann.

Das Kühlaggregat weist in einer bevorzugten Ausgestaltung der erfindungsgemäßen Brauvorrichtung einen Kältemittelkompressor zum Komprimieren des Kältemittels, einen Kühlkondensator zum Kühlen des komprimierten Kältemittels und ein Entspannungsventil auf, mit dem das durch den Kühlkondensator gekühlte Kältemittel entspannt und somit weiter gekühlt wird. Zwischen dem Kältemittelkompressor und dem Kühlkondensator kann eine Ausleitleitung mit einem vierten Anschlussabschnitt zum Anschließen einer Leitung vorgesehen sein, um wenigstens einen Teil des Kältemittels aus dem Kühlaggregat auszuleiten. Dabei kann ferner zwischen dem Kühlkondensator und dem Entspannungsventil eine Einleitleitung mit einem fünften Anschlussabschnitt zum Anschließen einer Leitung vorgesehen sein, um das von dem über die Ausleitleitung ausgeleitete Kältemittel in das Kühlaggregat wieder einzuleiten.

Dadurch wird es möglich, in dem Kühlaggregat das Kältemittel zunächst durch den Kältemittelkompressor zu komprimieren und dann wenigstens einen Teil von dem so komprimierten Kältemittel mittels der Ausleitleitung auszuleiten. Somit kann beispielsweise die von dem Kältemittel aufgenommene Wärme durch externe und gegebenenfalls energieeffizientere Vorrichtungen abgeführt und weiterverwendet werden. Gleichzeitig kann der zwischen dem Kältemittelkompressor und dem Entspannungsventil bestehende Druckunterschied genutzt werden, um das Kältemittel ohne zusätzliche Hilfsmittel, wie Pumpen, durch die Leitungen zu transportieren.

Durchlaufkühler und Flüssigkeitstank sind in einer bevorzugten Ausgestaltung der erfindungsgemäßen Brauvorrichtung direkt thermisch gekoppelt. Vorzugsweise ist der Durchlaufkühler dazu direkt an oder in einer Außenwand des Flüssigkeitstanks vorgesehen. Der Durchlaufkühler kann als Kühltasche ausgebildet sein, welche den Flüssigkeitstank wenigstens teilweise flächig kontaktierend umgibt.

Damit wird es möglich, eine kompakte und transportfähige Brauvorrichtung bereitzustellen, an der die thermische Kühlung des Braustoffes integral am oder im Flüssigkeitstank vorgesehen ist. Diese kann vor Ort ohne zusätzlichen Montageaufwand zwischen Durchlaufkühler und Flüssigkeitstank in Betrieb genommen werden.

Gemäß der Erfindung kann der Flüssigkeitstank der Brauvorrichtung ein Volumen im Bereich von 0,1m³ (100l) bis 1000m³ (1.000.000 l) besitzen. Die Brauvorrichtung kann ferner einen Träger zum Tragen des Flüssigkeitstanks und bevorzugt ferner zum Tragen der Kühlvorrichtung aufweisen.

Die gesamte Brauvorrichtung ist dabei bevorzugt derart dimensioniert, dass sie auf Standardpaletten, wie zum Beispiel Paletten gemäß EN 13698-1, oder in ISO-Containern, beispielsweise Container gemäß DIN / ISO 668, transportiert werden kann.

Das Kühlaggregat kann relativ zum Flüssigkeitstank fixiert sein und ist vorzugsweise unmittelbar an dem Flüssigkeitstank oder an dem Träger befestigt. Besonders bevorzugt weist das Kühlaggregat einen Ventilator zur Kühlung des Kühlaggregats auf.

Dies hat insbesondere den Vorteil, dass die Brauvorrichtung platzsparend am Bestimmungsort aufgestellt werden kann. Die Kühlung der Kühlaggregate mittels Ventilator erlaubt ferner, die abzuführende Wärme in einfacher Weise an die Umgebung abzugeben und so die Effizienz und Lebensdauer der Kühlaggregate zu gewährleisten.

Gemäß einer vorteilhaften Ausgestaltung der Brauvorrichtung kann die Kälteleitung einen dritten Anschlussabschnitt zum Anschließen einer Leitung zum Verbinden mit Kältemittelleitungen weiterer Brauvorrichtungen zu einem Kältenetzwerk aufweisen.

Gemäß der Erfindung wird dabei unter einem Kältenetzwerk insbesondere die Zusammenschaltung einer beliebigen Anzahl Kälte-liefernder, verbrauchender und Kältespeichernder Vorrichtungen sowie Leitungen verstanden, wie beispielsweise Schläuche und/oder Rohre, mittels denen die einzelnen Vorrichtungen netzartig verbunden sind.

Dadurch wird es möglich, das gekühlte Kältemittel auch anderen Kälte-liefernden, verbrauchenden und/oder Kälte-speichernden Vorrichtungen zur Verfügung zu stellen. Somit können beispielsweise Vorrichtungen ohne eigene Kühlaggregate, aber mit Kühlbedarf durch die Brauvorrichtung betrieben werden. Auch ist es denkbar, durch Zusammenschluss mehrerer kleiner Kühlaggregate eine insgesamt hohe Kühlleistung bereitstellen zu können, welche bedarfsgerecht an die entsprechenden Verbraucher verteilt werden kann. Dabei kann der Anschlussabschnitt auf sehr einfache und platzsparende Weise an die transportable Brauvorrichtung angebracht werden. Dazu reichen bereits relativ kurze Leitungen aus, so dass der Funktionsumfang der Brauvorrichtung erhöht werden kann, ohne dabei in einer Erhöhung des Platzbedarfs oder der Energieverluste zu resultieren.

Die Kälteleitung kann ferner ein Steuerventil zur Steuerung der Menge des vom Kühlaggregat zum Durchlaufkühler geleiteten Kühlmittels aufweisen. Gemäß der Erfindung können der erste Anschlussabschnitt, der zweite Anschlussabschnitt und/oder der dritte Anschlussabschnitt eine Schnellkupplung zum Anschließen der jeweiligen Leitung aufweisen. Dabei kann es sich vorzugsweise um ein Anschlussventil oder ein steuerbares Anschlussventil handeln.

Dadurch wird es unter anderem möglich, die Menge des in und aus der Brauvorrichtung ausströmenden Kältemittels zu kontrollieren und zu regeln. Im Speziellen lassen sich so die Durchflussmengen des Kältemittels jeder Kältemittelleitung regeln. Dadurch kann die Brauvorrichtung mittels Vorgaben des Betreibers gesteuert werden und hinsichtlich bestimmter Kriterien, wie beispielsweise der Temperatur des Braustoffes oder hinsichtlich weiterer energetischer Überlegungen, geregelt werden. Insbesondere ist die Brauvorrichtung somit einer automatisierten Regelung bzw. Steuerung zugänglich. Die Verbindung mit anderen Leitungen eines Kältenetzwerks wird durch Schnellkupplungen besonders erleichtert, so dass der Montageaufwand reduziert werden kann.

Die Erfindung betrifft ferner ein Brausystem zum Gären eines flüssigen Braustoffes, welches wenigstens zwei der zuvor beschriebenen Brauvorrichtungen enthält und zudem eine Verbindungsleitung aufweist, mit der alle Ausgangsleitungen über deren zweite Anschlussabschnitte mit allen Eingangsleitungen über deren erste Anschlussabschnitte verbunden sind, um das Kältemittels in die Kühlaggregate zurückzuführen.

Dies erlaubt es, ein Brausystem bereitstellen zu können, dass durch zwei oder mehr transportable Einheiten gebildet ist, welche in einfacher Weise miteinander verbunden werden können. Es wird dadurch unter anderem möglich, bei Ausfall einer Brauvorrichtung den Betrieb weiterer Brauvorrichtungen unbeschadet aufrechterhalten zu können. Ferner muss lediglich eine Verbindungleitung für die Herstellung eines Kühlmittelkreislaufs vorgesehen werden. Dadurch kann nicht nur der Aufwand für Montage und Wartung reduziert werden, sondern es können auch die Verluste von Energie und Druck in der Verbindungsleitung verringert werden. Zudem kann das Brausystem kompakt gehalten werden. Ferner wird durch das erfindungsgemäße Brausystem erleichtert, einzelne Brauvorrichtungen bei einem Ausfall auszutauschen und zu ersetzen. Diese Effekte werden umso deutlicher, je mehr der erfindungsgemäßen Brauvorrichtungen zu einem Brausystem gemäß der Erfindung zusammengeschlossen werden.

Das Brausystem gemäß der Erfindung kann ferner eine weitere Verbindungsleitung aufweisen, mit der die Kälteleitungen wenigstens zweier Brauvorrichtungen zu einem Kältenetzwerk verbunden sind. Dies erfolgt bevorzugt über die dritten Anschlussabschnitte der Kälteleitungen.

Dies hat insbesondere den Vorteil, dass alle in dem Kältenetzwerk verbundenen Brauvorrichtungen das Kältemittel in eine gemeinsame Kälteleitung einspeisen. Dadurch kann selbst bei Ausfall einer oder mehrerer Brauvorrichtungen der Kältekreislauf in dem Kältenetzwerk beibehalten werden. Des Weiteren kann derart eine Summation der Kälteleistungen der einzelnen Brauvorrichtungen erzielt werden. Daher kann beispielsweise für den Fall, dass nur ein sehr geringer Kältebedarf in dem Brausystem besteht, eine der das Netzwerk speisenden Kühlaggregate ausgeschalten werden. Zudem können auch in dem Fall, dass das Kühlaggregat einer einzelnen Brauvorrichtung nicht ausreichend ist, um eine bestimmte Wärmemenge von dem Flüssigkeitstank in zufriedenstellender Weise abzuführen, durch die Kälteleistungen anderer Brauvorrichtungen kompensiert werden. Dadurch wird es möglich, das Brausystem energieoptimal zu betreiben und während der Planungsphase auszulegen, wodurch der Wirkungsgrad der Brauvorrichtung durch Vermeidung unnötiger Apparategröße verbessert werden kann. Zudem kann flexibel auf Kapazitätserweiterungen reagiert werden, indem weitere Brauvorrichtungen in einfacher Weise an ein derartiges Brausystem baukastenartig angeschlossen werden können. Zudem kann bei einem derartig gestalteten Brausystem komplett auf das Vorsehen und Betreiben einer Pumpe zum Umwälzen des Kältemittels verzichtet werden.

In einer vorteilhaften Ausgestaltung des erfindungsgemäßen Brausystems weist das Brausystem ein weiteres zu kühlendes Element auf. Bei dem Element kann es sich beispielsweise um einen Würzekühler handeln. Das Element weist hierzu eine weitere Eingangsleitung auf, welche bevorzugt einen sechsten Anschlussabschnitt zum Anschließen einer Leitung, wie zum Beispiel der weiteren Verbindungsleitung, besitzt, um das Kältemittel in das Element zu leiten. Das Element verfügt dabei zudem über eine weitere Ausgangsleitung, welche bevorzugt mit einem siebten Anschlussabschnitt zum Anschließen einer Leitung, insbesondere der einen Verbindungsleitung, ausgestattet ist, um das Kältemittel von dem Element abzuführen.

Dadurch wird es möglich, durch das erfindungsgemäße Brausystem den Kältebedarf weiterer Elemente bedienen zu können. So können beispielsweise alle vorhandenen Kühlaggregate in die gemeinsame Kälteleitung gekühltes Kältemittel einspeisen, wobei sie das wieder zu bearbeitende Kältemittel aus der ersten Verbindungsleitung zurückerhalten. So kann auch beispielsweise der kühlaggregatlose Würzekühler angeschlossen werden. So kann beispielsweise erreicht werden, dass der Druck in den Verbindungsleitungen nahezu an jeder Stelle gleich ist, so dass alle Kühlaggregate je nach Bedarf bei Druckveränderung zu- bzw. abgeschaltet werden können. Das gewünschte Schaltverhalten der Kühlaggregate kann dann durch entsprechende Einstellung (beispielsweise kaskadierte Anordnung) erreicht werden. Dies ist insbesondere von Vorteil, wenn das Element beispielsweise nur für eine kurze Zeitperiode einen Kältebedarf aufweist, jedoch während der verbleibenden Zeit keinen Kältebedarf besitzt. In diesem Fall kann durch die Summation der Kälteleistung der einzelnen Brauvorrichtungen erreicht werden, den teilweise hohen Kältebedarf des hinzugefügten Elementes bedienen zu können. Damit kann beispielsweise auch auf das Vorsehen und Betreiben eines Kältespeichers verzichtet werden. Des Weiteren muss auch kein weiteres Kühlaggregat für das Element vorgesehen und betrieben werden. Zudem können die einzelnen Kühlaggregate für geringere Kälteleistungen ausgelegt werden, so dass diese für den Normalbetrieb nicht überdimensioniert sind. Dadurch wird es möglich, die Energieeffizienz des Brausystems verglichen zu konventionellen, insbesondere zentralen, indirekt gekühlten Kühlsystemen deutlich zu steigern. Ferner reduzieren sich der Aufwand für die Montage, Wartung und den Betrieb des Brausystems.

Das Brausystem kann ferner die eine Verbindungsleitung durch einen Wärmetauscher führen, um das Kältemittel vorzukühlen. Dabei ist vorzugsweise der Wärmetauscher räumlich getrennt von den wenigstens zwei Brauvorrichtungen angeordnet und der Wärmetauscher weist bevorzugt eine Wärmeabführvorrichtung zur Vorkühlung des Kältemittels auf.

Ferner ist es gemäß einer weiteren vorteilhaften Ausgestaltung des Brausystems auch vorstellbar, das Brausystem mit einer Wärmetauscherleitung vorzusehen, mit der alle Ausleitleitungen über deren vierte Anschlussabschnitte mit allen Einleitleitungen über deren fünfte Anschlussabschnitte verbunden werden, um so wenigstens einen Teil des Kältemittels bezüglich der Kühlaggregate umzuleiten. Das bedeutet, dass durch das Vorsehen der Wärmetauscherleitung wenigstens ein Teil des Kältemittels nicht auf direktem Wege durch das Kühlaggregat transportiert wird. Dabei kann die Wärmetauscherleitung durch einen Wärmetauscher zum Kühlen des Kältemittels geführt sein. Der Wärmetauscher ist hierbei bevorzugt räumlich getrennt von den wenigstens zwei Brauvorrichtungen angeordnet und ist besonders bevorzugt mit einer Wärmeabführvorrichtung zur Abführung der Wärme vorgesehen, die im Wärmetauscher bei der Kühlung des Kältemittels entstanden ist.

Dadurch kann erreicht werden, dass für den Fall, dass das Abführen von Wärme an die Umgebung der Brauvorrichtungen möglichst gering gehalten werden soll, ein definierter Teil der Wärme an anderer Stelle abgeführt wird. Dies kann beispielsweise der Fall sein, wenn das Brausystem in einem Kellergewölbe platziert wird oder anschließende Betriebsgebäude durch Lärm beeinträchtigt werden würden. So kann beispielsweise erreicht werden, dass der Wärmetauscher das komprimierte Kältemittel von einer Temperatur von beispielsweise 70°C auf eine Temperatur von 30°C abkühlt und dann in einem flüssigen Zustand an die Brauvorrichtungen abführt. Für die Leitung des Kältemittels durch den Wärmetauscher und die Verbindungsleitung wird ebenfalls keine zusätzliche Pumpvorrichtung benötigt, sondern der Transport des Kältemittels kann durch Druckdifferenzen in den Verbindungsleitungen bewirkt werden. Die bei der Abkühlung im Wärmetauscher abgeführte Wärme kann dann beispielsweise für die Heißwassergenerierung genutzt werden. Dieser Vorgang kann aufgrund der räumlich getrennten Anordnung beispielsweise an einem zentralen und für die Heißwassererzeugung günstigen Ort ausgeführt werden, wodurch die Effizienz des Brausystems erhöht werden kann.

Gemäß einer vorteilhaften Ausgestaltung des Brausystems kann die weitere Verbindungsleitung Leitungsabschnitte aufweisen, die durch Ventile oder Drosseln verbunden sind, um das Kältenetzwerk wahlweise in funktionale Abschnitte trennen zu können. Die eine Verbindungsleitung kann ferner Schnellkupplungen zum Anschließen an ihre entsprechenden Anschlussabschnitte aufweisen. Vorzugsweise finden sich hier auch Anschlussventile und insbesondere steuerbare Anschlussventile. Alternativ oder in Kombination mit der zuvor beschriebenen Ausgestaltung der einen Verbindungsleitung kann auch die weitere Verbindungsleitung Schnellkupplungen zum Anschließen an ihre entsprechenden Anschlussabschnitte aufweisen.

Das Brausystem kann ferner eine Messstelle, wie zum Beispiel eine Druckmessstelle aufweisen. Alternativ oder in Kombination kann auch eine Regelstelle, wie zum Beispiel eine verstellbare Drossel, in dem Brausystem gefunden werden. Auch eine Mess- und Regelungseinheit zur bevorzugt automatisierten Steuerung des Brausystems und insbesondere der steuerbaren Anschlussventile und/oder Steuerventile und/oder Ventile und/oder Drosseln für den Gär- und Kühlprozess kann vorgesehen werden.

Dadurch wird es möglich, das Brausystem bevorzugt (teil-) automatisiert zu kontrollieren und zu regeln und so während des Betriebes optimal betreiben zu können. Dadurch wird die Bedienung und der Betrieb des Brausystems vereinfacht und erlaubt die Anwendung von Regelstrategien und das Einbetten von Erfahrungswerten in die Kontrolle des Brausystems. Die Steuereinheit kann ferner zur Wiedergabe von Informationen verwendet werden, wie beispielsweise das Darstellen von aktuellen Betriebswerten auf einem Bildschirm oder mobilen Endgerät. Durch das Vorsehen von Schnellkupplungen lassen sich Montage, Wartung und Austausch von Brauvorrichtungen des Brausystems erleichtern und deren Aufwand reduzieren.

Weitere Ausgestaltungsformen und Vorteile der vorliegenden Erfindung werden anhand der folgenden Ausführungsbeispiele im Zusammenhang mit den Figuren der begleitenden Zeichnungen erläutert. Es zeigen:
- Figur 1: eine schematische Darstellung einer Brauvorrichtung gemäß einer Ausführungsform der Erfindung.
- Figur 2: eine schematische Darstellung eines Brausystems gemäß einer ersten Ausführungsform der Erfindung.
- Figur 3: eine schematische Darstellung eines Brausystems gemäß einer zweiten Ausführungsform der Erfindung mit zwei Brauvorrichtungen gemäß Figur 1.
- Figur 4: eine schematische Darstellung eines Brausystems gemäß einer dritten Ausführungsform der Erfindung mit vier Brauvorrichtungen gemäß Figur 1 und einem weiteren zu kühlenden Element (bspw. Würzekühler).
- Figur 5: eine schematische Darstellung eines Brausystems gemäß einer vierten Ausführungsform der Erfindung basierend auf dem Brausystem gemäß Figur 4 und einem Wärmetauscher.
- Figur 6: eine schematische Darstellung einer Ausgestaltung eines Kühlaggregats.
- Figur 7: eine schematische Darstellung eines Brausystems gemäß einer fünften Ausführungsform der Erfindung basierend auf der Ausgestaltung des Brausystems der Figur 3 mit dem Kühlaggregat gemäß Figur 6.

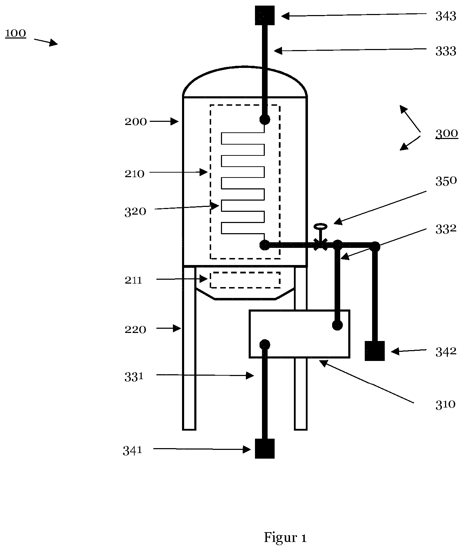

Figur 1 zeigt ein Ausführungsbeispiel einer Brauvorrichtung 100 gemäß der Erfindung, mit der es ermöglicht wird, diese als zusammenhängende, betriebsfertige und transportable Einheit bereitzustellen und bevorzugt derart bereitzustellen, dass mehrere dieser Brauvorrichtungen 100 zu einem Brausystem 400 zusammengeschlossen werden können. Unterschiedliche Ausführungsbeispiele der erfindungsgemäßen Brauvorrichtung 100 sowie des erfindungsgemäßen Brausystems 400 sind in den Figuren dargestellt.

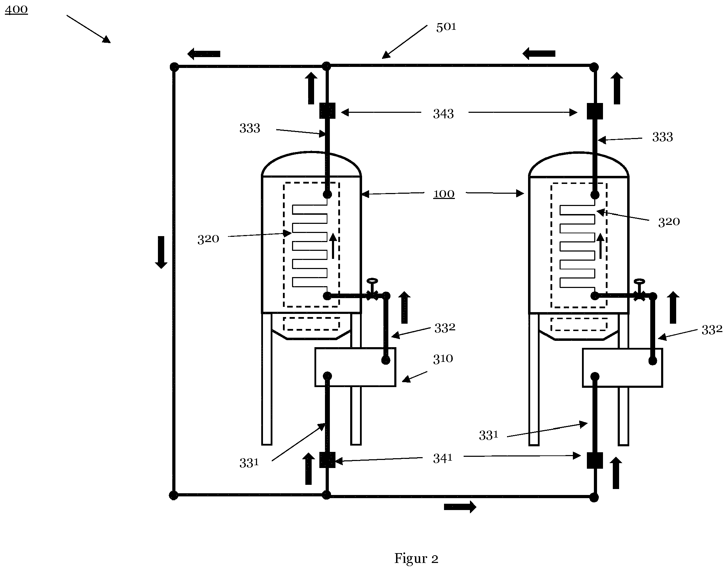

Die Figuren zeigen unterschiedliche Ausführungsbeispiele (hier Figuren 1, 3, 4, 5, 6, 7 einerseits und Figur 2 andererseits) einer Brauvorrichtung 100 zum Gären eines flüssigen Braustoffes gemäß der Erfindung. Bei dem flüssigen Braustoff kann es sich beispielsweise um eine gefilterte Flüssigkeit aus einem Würzekühler handeln, generell sind jedoch auch andere Flüssigkeiten denkbar, die vergoren werden können. Die Brauvorrichtung 100 weist einen Flüssigkeitstank 200 auf, um den flüssigen Braustoff aufzunehmen. Bei dem Flüssigkeitstank 200 kann es sich insbesondere um einen Gärtank oder einen Lagertank handeln, jedoch sind auch andere Behältnisse mit Eignung zur Aufnahme des flüssigen Braustoffes denkbar. Der Flüssigkeitstank 200 weist vorzugsweise ein Volumen im Bereich von 0,1m³ bis 1000 m³ auf, wobei die Erfindung hierauf nicht beschränkt ist. Bei dem vorgenannten Volumen handelt es sich dabei im Speziellen um das Fassungs- bzw. Innenvolumen des Flüssigkeitstanks 200. Es sei zudem auch darauf hingewiesen, dass bei entsprechender Größe der Brauvorrichtung 100 der Flüssigkeitstank 200 auch aus mehreren Teilen (Segmenten) bestehen kann, die erst vor Ort zusammengesetzt und aufgebaut werden können, um dadurch beispielsweise ein Überschreiten der transportierbaren Masse zu vermeiden.

Die Brauvorrichtung 100 besitzt ferner vorzugsweise einen Träger 220 zum Tragen des Flüssigkeitstanks 200. So ist in der Figur 1 beispielsweise der Flüssigkeitstank 200 auf einem Träger 220 befestigt, der mit 4 Füßen ausgestattet ist. Der Träger 220 kann aber auch ganz allgemein als ein Sockel oder als Dreibeinkonstruktion ausgeführt sein. Ferner ist auch eine Aufhängung des Flüssigkeitstanks 200 in einem Rahmen denkbar, auch kann man den Flüssigkeitstank 200 liegend anordnen, wobei diese Aufzählung nicht als limitierend angesehen werden sollte. Vielmehr ist die Erfindung nicht auf eine bestimmte Ausführung des Trägers 220 beschränkt.

Des Weiteren ist die Brauvorrichtung 100 mit einer Kühlvorrichtung 300 für die Kühlung des flüssigen Braustoffes ausgestattet. Diese kann ferner bevorzugt von dem Träger 220 getragen werden. Der Flüssigkeitstank 200 und die Kühlvorrichtung 300 sind dabei als eine zusammenhängende, transportable Einheit bereitgestellt.

Die Kühlvorrichtung 300 weist hierzu ein Kühlaggregat 310 auf, mit dem ein Kältemittel gekühlt wird. Als Kältemittel können beispielsweise Ammoniak, Kohlenwasserstoffe oder Kohlenstoffdioxid verwendet werden, die in der Natur vorkommen und zur Gruppe der natürlichen Kältemittel zählen. Auch existieren synthetisch erzeugte Kältemittel, die oftmals aus halogenierten Kohlenwasserstoffen bestehen und ebenso in der Brauvorrichtung 100 gemäß der Erfindung eingesetzt werden können. Das Kühlaggregat kann relativ fix zum Flüssigkeitstank 200 vorgesehen werden, vorzugsweise ist es unmittelbar an dem Flüssigkeitstank 200 befestigt. Das Kühlaggregat 310 kann auch an dem Träger 220 befestigt sein, wie es beispielsweise in Figur 1 dargestellt ist. In dieser Darstellung ist das Kühlaggregat 310 relativ zu einem der zwei dargestellten Füße des Trägers 220 fixiert. Das Kühlaggregat 310 kann zudem mit einem Ventilator zur Kühlung des Kühlaggregats 310 ausgestattet sein, welcher ebenfalls vom Träger 220 getragen sein kann.

Die Kühlvorrichtung 300 weist ferner einen Durchlaufkühler 320 zur Kühlung des flüssigen Braustoffes in dem Flüssigkeitstank 200 mittels des gekühlten Kältemittels auf. Der Durchlaufkühler 320 ist vorzugsweise direkt thermisch mit dem Flüssigkeitstank 200 gekoppelt. Dazu kann der Durchlaufkühler 320 direkt an oder in einer Außenwand 210, 211 des Flüssigkeitstanks vorgesehen sein. Besonders bevorzugt ist der Durchlaufkühler 320 als Kühltasche ausgebildet, welche den Flüssigkeitstank 200 wenigstens teilweise flächig kontaktierend umgibt. Bei der Auswahl einer geeigneten Außenfläche 210, 211 zur Befestigung des Durchlaufkühlers 320 sind bevorzugt solche Flächen zu wählen, die eine gute und flächige Wärmeübertragung zwischen dem Flüssigkeitstank 200 und dem Durchlaufkühler 320 erlauben. Der Wärmeübergang zwischen den beiden Bauteilen kann vorzugsweise noch durch das Verwenden von Wärmeleitpasten verbessert werden. Der Durchlaufkühler 320 selbst kann beispielsweise als Plattenkondensator, Plattenwärmetauscher, als gewundene Rohrleitung oder Kühltasche ausgeführt sein, jedoch sind auch andere Ausführungsformen denkbar, mit denen das Kältemittel über eine Kontaktfläche des Flüssigkeitstanks 200 zur Aufnahme von Wärme geleitet werden kann. So könnte beispielsweise bei Ausführung des Durchlaufkühlers 320 als Plattenkondensator dessen innere Platte als eine Wandfläche des Flüssigkeitstanks 200 ausgeführt werden.

Figur 1 zeigt beispielsweise einen Durchlaufkühler 320, der an einer Außenfläche 210 der Mantelfläche des Flüssigkeitstanks 200 angebracht ist. Es wäre in dem dargestellten Ausführungsbeispiel jedoch ebenso denkbar, den Durchlaufkühler 320 in einer konisch zulaufenden Außenfläche 211 des Flüssigkeitstanks 200 in der Nähe des Bodens des Flüssigkeitstanks 200 vorzusehen.

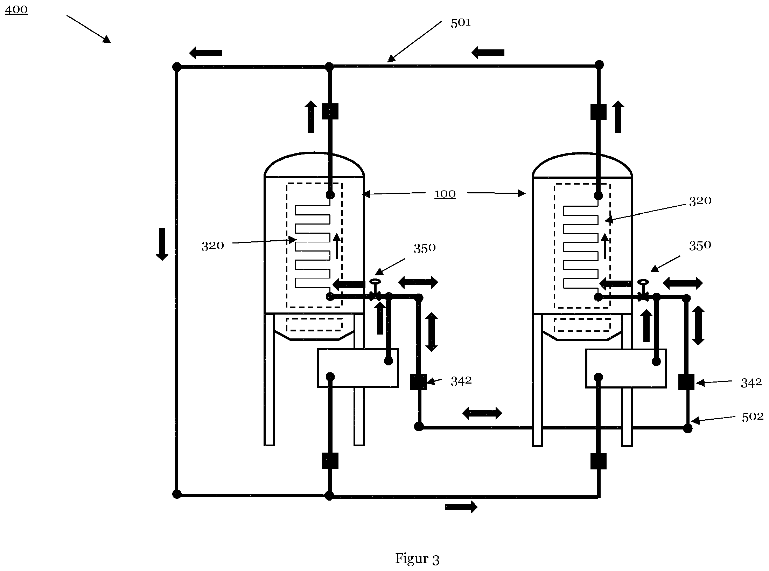

Die Kühlvorrichtung 300 weist ferner Kältemittelleitungen auf. Die Kältemittelleitungen umfassen dabei eine Eingangsleitung 331 mit einem ersten Anschlussabschnitt 341, welcher zum Anschließen einer Leitung zum Leiten von Kältemittel in das Kühlaggregat 310 vorgesehen ist. Zudem findet sich eine Ausgangsleitung 333 mit einem zweiten Anschlussabschnitt 343 zum Anschließen einer Leitung, um das Kältemittel von dem Durchlaufkühler 320 abzuführen. Ferner existiert eine Kälteleitung 332 zum Leiten des gekühlten Kältemittels vom Kühlaggregat 310 zum Durchlaufkühler 320. Eine so in seiner einfachsten Form bereitgestellte Brauvorrichtung 100 ist in Figur 2 dargestellt. Darüber hinaus kann die Kälteleitung 332 zudem einen dritten Anschlussabschnitt 342 zum Anschließen einer Leitung zum Verbinden mit den Kältemittelleitungen weiterer Brauvorrichtungen 100 zu einem Kältenetzwerk (vgl. Figuren 3 bis 5) aufweisen. Eine derartige Ausführungsform ist beispielsweise in Figur 1 dargestellt. Hierbei sind die drei Kältemittelleitungen 331-333 sowie deren zugehörige Anschlussabschnitte 341-343 dargestellt.

Bei den jeweiligen Kältemittelleitungen kann es sich beispielsweise um Rohre oder Schläuche handeln. Die Leitungslängen der Kältemittelleitungen können je nach Anwendung variieren. So können für die Eingangsleitung 331 und die Ausgangsleitung 333 bereits Leitungen mit relativ geringer Erstreckung ausreichen (Leitungslänge < 1cm). Vielmehr kann es sogar für diese beiden Kältemittelleitungen genügen, lediglich den entsprechenden ersten beziehungsweise zweiten Anschlussabschnitt 341, 343 vorzusehen.

Der erste bis dritte Anschlussabschnitt 341-343 kann jeweils eine Schnellkupplung zum Anschließen der jeweiligen Leitung aufweisen. Die Schnellkupplung kann beispielsweise als Steck-, Klemm- oder Schraubverbindung ausgeführt sein, jedoch sind auch andere über die vorgenannten Verbindungsarten hinausgehende Schnellkupplungen denkbar. Als Steckverbindung sind zum Beispiel auch Steckverbindungen vorstellbar wie sie im Automobilbau (beispielsweise als standardisierter VDA-Anschlussstutzen oder SAE J2044 normgemäß) oftmals benutzt werden. Vorzugsweise ist an dem ersten bis dritten Anschlussabschnitt 341-343 jeweils ein Anschlussventil vorgesehen, wobei es sich bei diesem besonders bevorzugt um ein steuerbares Anschlussventil handelt. Durch ein derartiges Anschlussventil kann beispielsweise der Rückfluss von Kältemittel verhindert werden. Ferner kann ein Auslaufen des Kältemittels aus der Brauvorrichtung 100 verhindert werden, falls sich eine der Verbindungen an einem der ersten bis dritten Anschlussabschnitte 341-343 lockern oder lösen sollte.

Die Kälteleitung 332 weist ferner bevorzugt ein Steuerventil 350 auf, um die Menge des vom Kühlaggregat 310 zum Durchlaufkühler 320 geleiteten Kühlmittels zu steuern. Dies ist beispielhaft in Figur 1 dargestellt. Hierbei ist zu erkennen, dass das Steuerventil 350 in einem Leitungsabschnitt der Kälteleitung 332 befestigt ist, der sich unmittelbar vor dem Durchlaufkühler 320 befindet. Dadurch wird es möglich, lediglich die Menge des Kühlmittels aus dem Kühlaggregat 310 zu begrenzen, die in den Durchlaufkühler 320 geleitet wird. Dagegen wird die verbleibende Menge des Kühlmittels aus dem Kühlaggregat 310 zur Weiterleitung an den dritten Anschlussabschnitt 342 (soweit vorhanden) und somit an ein eventuell bereitgestelltes Kältenetzwerk nicht durch das Steuerventil 350 beeinträchtigt. Bei dem vorgenannten Steuerventil 350 kann es sich beispielsweise um ein mechanisch, pneumatisch, hydraulisch oder elektrisch betätigtes Ventil handeln, das automatisch oder manuell bedient werden kann. Es kann sich ferner auch um ein Ventil mit einer kontinuierlich einstellbaren Durchflussmenge oder um ein Ventil mit diskreten Regelwegen handeln.

Wie bereits eingangs erwähnt, sind der Flüssigkeitstank 200 und die Kühlvorrichtung 300 als eine zusammenhängende, transportable Einheit bereitgestellt. Ein derartiger Zusammenschluss ist beispielsweise in Figur 1 zu sehen. Hier sind die Kühlvorrichtung 300 und der Flüssigkeitstank 200 so miteinander verbunden, dass die gesamte Brauvorrichtung 100 als ein Teil transportiert werden kann. An dem Ausführungsbeispiel der Figur 1 ist ferner ersichtlich, dass durch einfaches Vorsehen einer weiteren Leitung (bspw. einer Verbindungsleitung 501, wie im weiteren noch beschrieben) zwischen dem ersten und dem zweiten Anschlussabschnitt 341, 343 der Kältekreislauf für den Betrieb des Kühlaggregats 310 geschlossen und somit die Brauvorrichtung 100 auf einfach Weise betriebsbereit bereitgestellt werden kann. Eine weitere Besonderheit der Brauvorrichtung 100 ist, dass über die Anschlussabschnitte 341-343 auch mehrere Brauvorrichtungen 100 in einfacher Weise zu einem Brausystem 400 zusammengeschlossen werden können.

Ein derartiges Brausystem 400 gemäß der Erfindung wird im Folgenden weiter beschrieben.

Das Brausystem 400 zum Gären eines flüssigen Braustoffes weist hierzu wenigstens zwei der zuvor beschriebenen Brauvorrichtungen 100 auf, wobei eine Verbindungsleitung 501 verwendet wird, um alle Ausgangsleitungen 333 über deren zweite Anschlussabschnitte 343 mit allen Eingangsleitungen 331 über deren erste Anschlussabschnitte 341 zum Zurückführen des Kältemittels in die Kühlaggregate 310 zu verbinden.

Ein erstes Ausführungsbeispiel für ein derartiges Brausystem 400 ist in Figur 2 gezeigt. Dargestellt sind insbesondere zwei Brauvorrichtungen 100, deren Eingangsleitungen 331 und Ausgangsleitungen 333 über eine Verbindungsleitung 501 verbunden sind. Dazu werden jeweils der erste und zweite Anschlussabschnitt 341, 343 verwendet. Am Beispiel der Figur 2 sind ferner mögliche Fließrichtungen des Kältemittels angedeutet. Das gekühlte Kältemittel strömt in diesem Beispiel zunächst aus den Kühlaggregaten 310 über die Kälteleitungen 332 in den jeweiligen Durchlaufkühler 320 ein. Das Kältemittel durchläuft den Durchlaufkühler 320 zur Kühlung des flüssigen Braustoffes in dem Flüssigkeitstank 200 und verlässt anschließend den Durchlaufkühler 320 über den entsprechenden zweiten Anschlussabschnitt 343, ehe es in der Verbindungsleitung 501 wieder zusammenfließt und über diese wieder zurückgeleitet und durch die ersten Anschlussabschnitte 341 der Eingangsleitungen 331 wieder zu den Kühlaggregaten 310 zurückkehrt. Figur 2 zeigt einen geschlossenen Kältekreislauf des Kältemittels.

Das Brausystem 400 kann ferner eine weitere Verbindungsleitung 502 zum Verbinden der Kälteleitungen 332 wenigstens zweier Brauvorrichtungen 100 zu einem Kältenetzwerk umfassen. Dies erfolgt bevorzugt über die dritten Anschlussabschnitte 342 der zugehörigen Kälteleitungen 332. Die weitere Verbindungsleitung 502 kann dabei ferner Leitungsabschnitte aufweisen, die durch Ventile oder Drosseln verbunden sind, um das Kältenetzwerk wahlweise in funktionale Abschnitte trennen zu können. Ein Beispiel für ein derartiges Brausystem 400 ist in dem Ausführungsbeispiel der Figur 3 gezeigt. Dabei wird deutlich, dass derartige funktionale Abschnitte beispielsweise genutzt werden können, um etwaig auftretende Leckagen in einem Abschnitt der Verbindungsleitung 501 durch eine Drossel oder Ventil abzusperren und dann mittels eines Bypasses oder ähnlich geeigneten Vorrichtungen zu überbrücken. Die eine Verbindungsleitung 501 und die weitere Verbindungsleitung 502 können wahlweise mit Schnellkupplungen versehen werden. Diese enthalten ferner vorzugsweise Anschlussventile und insbesondere steuerbare Anschlussventile zum Anschließen an die entsprechenden Anschlussabschnitte 341-343.

Figur 3 zeigt ferner beispielhaft die Strömungsrichtungen des Kältemittels gemäß dieser Ausführungsform des Brausystems 400. Hierbei ist ersichtlich, dass jedem der beiden Brauvorrichtungen 100 mittels der weiteren Verbindungsleitung 502 das gekühlte Kältemittel aus beiden Kühlaggregaten 310 zur Verfügung steht und in den jeweiligen Durchlaufkühlern 320 zur Kühlung des flüssigen Braustoffes genutzt werden kann. Die Fließrichtung des Kältemittels ist daher mit einem Pfeil in beide Richtungen gekennzeichnet. Ferner wird auch deutlich, wie die jeweiligen Ströme in den Kältemittelleitungen mittels der Steuerventile 350 reguliert werden können. Somit kann beispielsweise der in der Figur 3 links dargestellten Brauvorrichtung 100 mehr Kältemittel zugeführt werden als der rechten Brauvorrichtung 100, bei entsprechender Stellung der beiden Steuerventile 350.

Das Brausystem 400 kann ferner ein weiteres Element 600 mit Kühlbedarf aufweisen. Dabei kann es sich beispielsweise um einen Würzekühler handeln. Das Element 600 weist hierzu bevorzugt eine weitere Eingangsleitung 631 mit einem sechsten Anschlussabschnitt 641 zum Anschließen einer Leitung auf. Bei dieser Leitung kann es sich insbesondere um die weitere Verbindungsleitung 502 handeln, um so Kältemittel in das Kühlaggregat zu leiten. Ferner weist das Element 600 eine weitere Ausgangsleitung 633 auf, welche bevorzugt mit einem siebten Anschlussabschnitt 643 zum Anschließen einer Leitung versehen ist. Hierbei kann es sich insbesondere um die eine Verbindungsleitung 501 handeln, um damit das Kältemittel von dem Element 600 abzuführen.

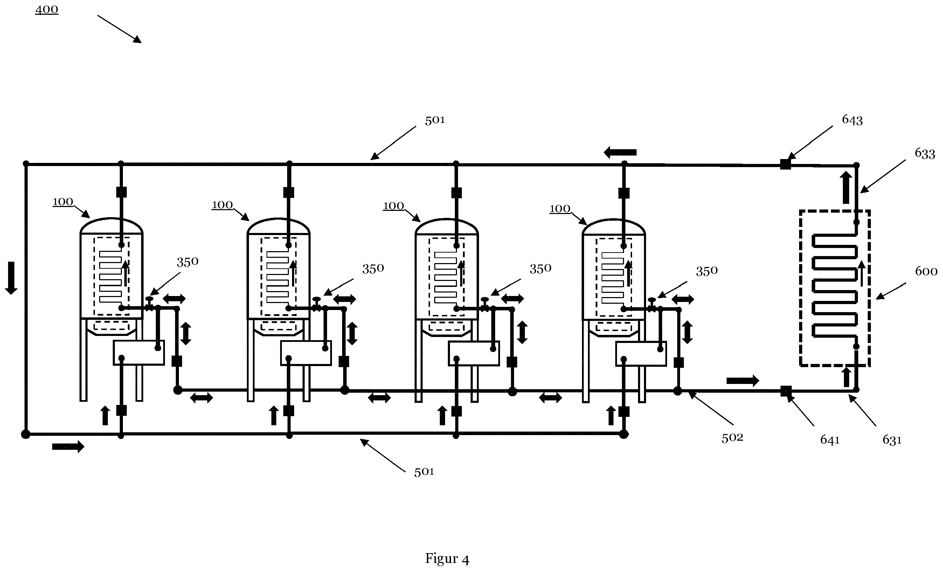

Ein Beispiel für ein derartiges Brausystem 400 ist in dem Ausführungsbeispiel der Figur 4 gezeigt. Hierbei wird unter anderem der Anschluss des Elementes 600 in dem Brausystem 400 deutlich. Die weitere Eingangsleitung 631 ist dabei mit der weiteren Verbindungsleitung 502 verbunden, wodurch gekühltes Kältemittel durch das Element 600 hindurchströmen kann. Die weitere Ausgangsleitung 633 führt das erwärmte Kältemittel wieder in den Kältekreislauf zurück, da sie mit der einen Verbindungsleitung 501 verbunden ist. Dadurch wird beispielsweise deutlich, wie bei Verwendung eines Würzekühlers als Element 600 die Kühlung desselben durch die Brauvorrichtungen 100 erreicht werden kann. Wie eingangs beschrieben, wird vom Würzekühler 600 für eine kurze Zeit ein hoher Kältebedarf erfordert. In diesem Fall können beispielsweise die Steuerventile 350 der einzelnen Brauvorrichtungen 100 komplett oder nahezu geschlossen werden, so dass der Großteil des gekühlten Kühlmittels dem Würzekühler 600 zur Verfügung steht. Dadurch wird das Vorsehen von Kältespeichern oder die Überdimensionierung der Kälteleistung eines zentralen Kältesystems obsolet.

Das Brausystem 400 kann ferner derart gestaltet sein, dass die eine Verbindungsleitung 501 durch einen Wärmetauscher 701 zum Vorkühlen des Kältemittels geführt ist. Bei dem Wärmetauscher 701 kann es sich beispielsweise um einen Plattenkondensator, Plattenwärmetauscher oder eine gewundene Rohrleitung handeln, jedoch sind auch andere Ausführungsformen denkbar, mit denen das Kältemittel über eine Kontaktfläche des Wärmetauschers 701 zur Abgabe von Wärme geleitet werden kann. Vorzugsweise ist der Wärmetauscher 701 dazu räumlich getrennt von den wenigstens zwei Brauvorrichtungen 100 angeordnet. Der Wärmetauscher 701 weist ferner bevorzugt eine Wärmeabführvorrichtung 702 zur Vorkühlung des Kältemittels auf. Dabei wird bevorzugt mit der Wärmeabführvorrichtung 702 die im Wärmetauscher 701 bei der Kühlung des Kältemittels entstandene Wärme abgeführt, was beispielsweise mittels eines erzeugten Luftdurchsatzes oder auch mittels einer Flüssigkeitskühlung, wie zum Beispiel einer Wasserkühlung, erreicht werden kann.

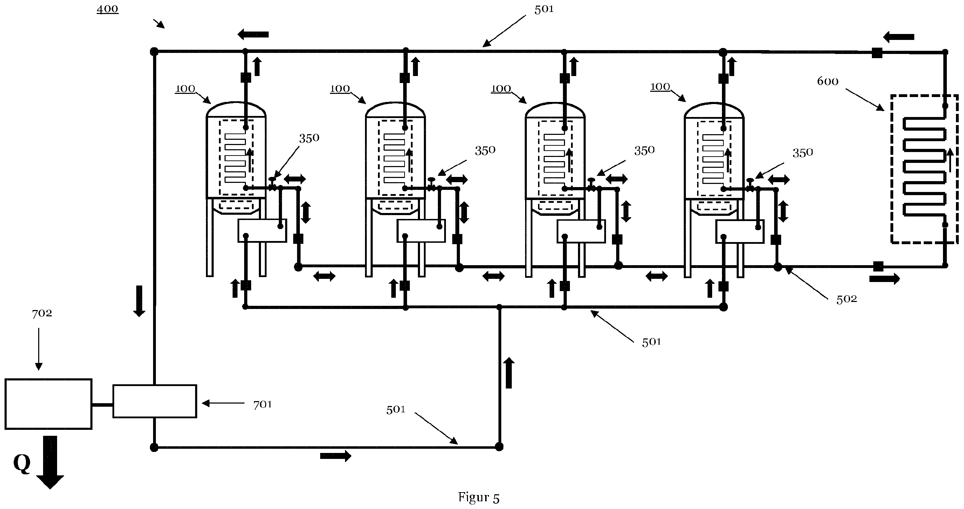

Ein Beispiel für ein derartiges Brausystem 400 ist in dem Ausführungsbeispiel der Figur 5 gezeigt. Hierbei wird deutlich, wie das erwärmte Kältemittel über die eine Verbindungsleitung 501 durch den Wärmetauscher 701 geleitet wird. Durch eine dem Wärmetauscher 701 zugeordnete Wärmeabführvorrichtung 702 wird die Wärme aus dem Kältemittel an die Umgebung abgegeben. Dies ist exemplarisch durch einen Pfeil mit dem Bezugszeichen "Q" gekennzeichnet. Das heruntergekühlte Kältemittel kann dann mittels der einen Verbindungsleitung 501 in den Kältekreislauf eingespeist werden; mithin also an den Kühlaggregaten 310 bereitgestellt werden. Dadurch wird es beispielsweise ermöglicht, dass ein Großteil der abgeführten Wärme räumlich getrennt von den Brauvorrichtungen 100 abgeführt wird. So wird beispielsweise ein Aufheizen eines Kellergewölbes, in dem sich die Brauvorrichtungen 100 befinden, verhindert. Ferner kann durch eine derartige Anordnung die abgeführte Wärme Q gezielt weiterverwendet werden, wie zum Beispiel zum Heizen von Betriebsgebäuden, zur Prozessoptimierung oder für andere energieintensive Betriebsprozesse. Ein konkretes Beispiel hierzu wäre das Vorheizen einer in dem Würzekocher befindlichen Flüssigkeit, so dass die abgeführte Wärme Q nicht ungenutzt bleibt. So kann beispielsweise mittels einem flüssigkeitsgekühlten Kondensator (Einheit aus dem Wärmetauscher 701 und der Wärmeabführvorrichtung 702) Heißwasser mit einer Temperatur von etwa 70°C generiert werden.

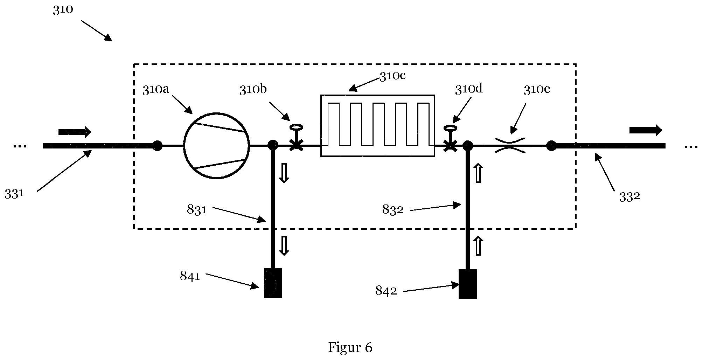

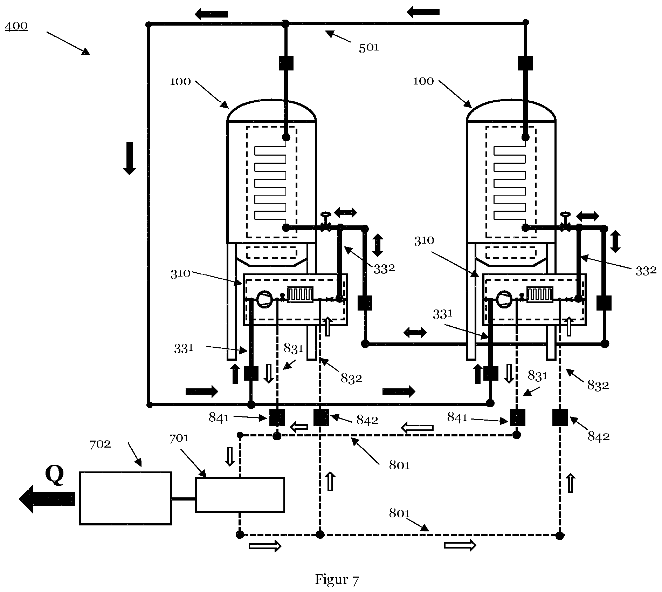

Es ist ferner auch eine Variation des vorgestellten Ausführungsbeispiels aus Figur 5 vorstellbar, welche im Weiteren unter Bezugnahme auf die Figuren 6 und 7 vorgestellt wird. Hierbei soll auf ähnliche Weise, wie zuvor bereits ausgeführt, die von dem Kältemittel aufgenommene Wärme an einer von dem Aufstellungsort der Kühlvorrichtungen 300 abweichenden Stelle abgeführt und gezielt weiterverwendet werden. Als Beispiele für Anwendungsmöglichkeiten einer derartigen Ausführungsform können das Heizen von Betriebsgebäuden, die energetische Prozessoptimierung des Brauprozesses oder andere energieintensive Betriebsprozesse genannt werden.

Dazu wird in dem Kühlsystem 400 gemäß Figur 7 eine besondere Ausgestaltung des Kühlaggregates 310 verwendet, die beispielhaft in Figur 6 dargestellt ist.

Das Kühlaggregat 310 kann hierbei einen Kältemittelkompressor 310a aufweisen, um das Kältemittel zu komprimieren. Ferner ist das Kühlaggregat 310 bevorzugt mit einem Kühlkondensator 310c zum Abführen von Wärme von dem komprimierten Kältemittel vorgesehen. Ferner kann das Kühlaggregat ein Entspannungsventil 310e besitzen, mit dem das Kältemittel entspannt und somit weiter abgekühlt wird. Die einzelnen Elemente des Kühlaggregates 310 können miteinander durch eine gemeinsame Verbindungsleitung (kein Bezugszeichen) verbunden sein, so wie in Figur 6 dargestellt.

Das Kühlaggregat 310 erhält Anschlussmöglichkeiten an die weiteren Bestandteile der Kühlvorrichtung 300 durch die Eingangsleitung 331 und die Kälteleitung 332. Dies ist in der Figur 6 dargestellt. Ferner ist zu erkennen, dass die Eingangsleitung 331 direkt mit dem Kältemittelkompressor 310a verbunden und das Entspannungsventil 310e an die Kälteleitung 333 angeschlossen werden kann.

Dieser Aufbau des Kühlaggregats 310 lässt sich auf alle Ausführungsbeispiele anwenden und kann gemäß der Erfindung ferner derart erweitert werden, indem zwischen dem Kältemittelkompressor 310a und dem Kühlkondensator 310c eine Ausleitleitung 831 zum Ausleiten wenigstens eines Teils des Kältemittels aus dem Kühlaggregat 310 vorgesehen ist. Vorzugsweise ist die Ausleitleitung 831 dabei mit einem vierten Anschlussabschnitt 841 zum Anschließen einer Leitung vorgesehen. Ferner kann zwischen dem Kühlkondensator 310c und dem Entspannungsventil 310e eine Einleitleitung 832 zum Einleiten des von dem über die Ausleitleitung 831 ausgeleiteten Kältemittels in das Kühlaggregat 310 vorgesehen sein. Bevorzugt weist die Einleitleitung 832 einen fünften Anschlussabschnitt 842 zum Anschließen einer Leitung auf. Dies ist exemplarisch in Figur 6 dargestellt. Zudem finden sich in Figur 6 auch die möglichen Fließrichtungen des Kältemittels, welche durch ausgefüllte und nicht ausgefüllte Pfeile dargestellt sind, um die Zuordenbarkeit der Fließrichtungen zu den jeweiligen Leitungsabschnitten zu erhöhen.

Ferner können auch steuerbare Absperrventile 310b, 310d in dem Kühlaggregat derart angeordnet werden, dass beispielsweise die Durchflussmenge des durch den Kühlkondensator 310c fließenden Kältemittels je nach Bedarf eingestellt und geregelt werden kann. Eine derartige Anordnung der Absperrventile 310b, 310d ist in Figur 6 exemplarisch dargestellt.

Das in Figur 7 dargestellte Ausführungsbeispiel basiert auf dem bereits aus der Figur 3 bekannten Brausystem 400, bestehend aus zwei Brauvorrichtungen 100, die zu einem Kältenetzwerk gemäß der Erfindung verbunden sind.

In diesem Ausführungsbeispiel weist vorzugsweise zumindest ein Teil der zu dem Kühlnetzwerk verbundenen Brauvorrichtungen 100 das zuvor vorgestellte Kühlaggregat 310 aus Figur 6 auf.

Die jeweiligen Ausleitleitungen 831 der Kühlaggregate 310 können dabei über deren vierte Anschlussabschnitte 841 mit allen Einleitleitungen 832 über deren fünfte Anschlussabschnitte 842 durch eine gemeinsame Wärmetauscherleitung 801 verbunden sein, um so wenigstens einen Teil des Kältemittels bezüglich der Kühlaggregate 310 umzuleiten.

Ferner ist es jedoch auch vorstellbar, das Kältemittel entweder gänzlich überhaupt nicht oder in seiner Gesamtheit über die Ausleitleitungen 831 aus den Kühlaggregaten 310 auszuleiten. Das Kältemittel wird dabei bevorzugt durch die Eingangsleitung 331 in das Kühlaggregat 310 eingeleitet.

Die Wärmetauscherleitung 801 kann durch einen Wärmetauscher 701 geführt werden, welcher besonders bevorzugt räumlich getrennt von den wenigstens zwei Brauvorrichtungen 100 angeordnet ist. Der Wärmetauscher 701 kann hierbei beispielsweise als ein Kondensator, als ein Plattenwärmetauscher, als ein Rohrbündelwärmetauscher oder dergleichen ausgeführt werden.

Der Wärmetauscher 701 kann ferner mit einer Wärmeabführvorrichtung 702 verbunden werden, um die im Wärmetauscher 701 bei der Kühlung des Kältemittels entstandene Wärme abzuführen. Dies ist in Figur 7 durch einen Pfeil mit dem Bezugszeichen "Q" gekennzeichnet. Die Wärmeabführvorrichtung 702 kann beispielsweise als eine Flüssigkeitskühlung eines Kondensators, als Gegenstromwärmetauscher, als rekuperativer Wärmerückgewinner oder als eine Warmluftabführung ausgeführt sein. Die Art und Ausführungform der Verbindung zwischen dem Wärmetauscher 701 und der Wärmeabführvorrichtung 702 ergibt sich folglich aus den jeweilig gewählten Ausführungsformen der beiden Bauteile.

Nach der Kühlung des Kältemittels im Wärmetauscher 701 kann das gekühlte Kältemittel durch die Wärmetauscherleitung 801 von dem Wärmetauscher 701 zu den jeweiligen Kühlaggregaten 310 zurückgeleitet und in die korrespondierenden Einleitleitungen 832 eingespeist werden. Von dort wird das Kältemittel bevorzugt zu dem Entspannungsventil 310d transportiert und über die Kältemittelleitung 332 an das Kältenetzwerk abgegeben, so dass das gekühlte Kältemittel beispielsweise wieder für die Kühlung des Braustoffes zur Verfügung steht.

Möglichen Fließrichtungen des Kältemittels in dem Leitungsnetzwerk sind in Figur 7 durch Pfeile angedeutet. Die Wärmetauscherleitung 801 sowie die Ausleitleitungen 831 und die Einleitleitungen 832 sind zur Verbesserung der Übersichtlichkeit durch eine gestrichelte Linie dargestellt. Ferner werden die möglichen Fließrichtungen speziell in diesen vorgenannten Leitungen durch nicht ausgefüllte Pfeile angedeutet.

Ferner ist es denkbar, durch Ansteuern der steuerbaren Absperrventile 310b, 310c zwischen einer Kühlung des Kältemittels durch den Kühlkondensator 310c in dem Kühlaggregat 310 (Ventilstellung für beide Absperrventile offen) und einer Kühlung des Kältemittels durch den Wärmetauscher 701 außerhalb des Kühlaggregats 310 (Ventilstellung für beide Absperrventile geschlossen) zu wählen. Es ist ferner auch denkbar, das Kältemittel sowohl durch den Kühlkondensator 310c und den Wärmetauscher 701 zu kühlen, falls beispielsweise ein erhöhter Kältebedarf, wie zum Beispiel während der Würzekühlung, besteht.

Das Brausystem 400 kann zudem eine Messstelle, beispielsweise zum Messen des Drucks in den Leitungen 331, 332, 333, 501, 502, beispielsweise mittels Manometer aufweisen. Wahlweise kann auch eine Regelstelle, wie zum Beispiel eine verstellbare Drossel, vorgesehen sein. Diese können dann unter anderem dazu genutzt werden, eine Mess- und Regelungseinheit zur wahlweise automatisierten Steuerung des Brausystems 400 für den Gär- und Kühlprozess mit Informationen und Eingriffsmöglichkeiten in den Prozess auszustatten. Damit wird es beispielsweise möglich, eine energieoptimierte Regelstrategie für das Brausystem 400 automatisiert ablaufen zu lassen.

Im Folgenden wird kurz ein mögliches Verfahren für einen bevorzugt automatisierten Gär- und Kühlprozess eines erfindungsgemäßen Brausystems, insbesondere eines flüssigen Braustoffes, und insbesondere zu dessen Temperaturkontrolle beschrieben.

Zunächst werden wenigstens zwei erfindungsgemäße Brauvorrichtungen bereitgestellt. Sodann werden die (alle) Ausgangsleitungen 333 über deren zweite Anschlussabschnitte 343 mit den (allen) Eingangsleitungen 331 über deren erste Anschlussabschnitte 341 mittels einer Verbindungsleitung 501 zum Zurückführen des Kältemittels in die Kühlaggregate 310 verbunden (vgl. Figur 2). Somit wird ein erfindungsgemäßes Brausystem 400 bereitgestellt. In einer bevorzugten Ausgestaltungsform können die Kälteleitungen 332 wenigstens zweier (oder mehrerer oder aller) Brauvorrichtungen 100 zu einem Kältenetzwerk mittels einer weiteren Verbindungsleitung 502 verbunden werden; dies bevorzugt über deren dritte Anschlussabschnitte 342 (vgl. Figuren 3 bis 5). Dabei kann die weitere Verbindungsleitung 502 Leitungsabschnitte aufweisen, die durch Ventile oder Drosseln verbunden sind, um das Kältenetzwerk wahlweise in funktionale Abschnitte trennen zu können. Das Brausystem 400 kann ferner ein weiteres zu kühlendes Element 600, wie beispielsweise einen Würzekühler, aufweisen. Dieses Element 600 weist eine weitere Eingangsleitung 631 bevorzugt mit einem sechsten Anschlussabschnitt 641 zum Anschließen einer Leitung, insbesondere der weiteren Verbindungsleitung 502, auf. Kältemittel wird über diese Eingangsleitung in und durch das Element 600 geführt (hier beispielhaft zum Zwecke der Würzekühlung). Das Element 600 weist ferner eine weitere Ausgangsleitung 633 bevorzugt mit einem siebten Anschlussabschnitt 643 zum Anschließen einer Leitung, insbesondere der einen Verbindungsleitung 501, auf. Über diese Ausgangsleitung 633 wird das Kältemittel von dem Element 600 abgeführt und bevorzugt in den Kreislauf zurückgeführt, um wieder - bspw. via Verbindungsleitung 501 an den Kühlaggregaten 310 bereitgestellt zu werden(vgl. Figur 4). Die eine Verbindungsleitung 501 kann durch einen Wärmetauscher 701 zum Vorkühlen des Kältemittels geführt sein (vgl. Figur 5).

Mittels einer Mess- und Regelungseinheit kann der Gär- und Kühlprozess des Brausystems 400, insbesondere die steuerbaren Anschlussventile und/oder Steuerventile 350 und/oder Ventile und/oder Drosseln, bevorzugt automatisiert gesteuert werden.

Die vorliegende Erfindung ist durch die vorbeschriebenen Ausführungsbeispiele nicht beschränkt, sofern sie vom Gegenstand der folgenden Ansprüche umfasst ist. Insbesondere sind sämtliche Merkmale der Ausführungsbeispiele in beliebiger Weise mit- und untereinander kombinierbar und austauschbar.

## Patentansprüche

1. Brauvorrichtung (100) zum Gären eines flüssigen Braustoffes, aufweisend
- einen Flüssigkeitstank (200), insbesondere Gärtank, zur Aufnahme des flüssigen Braustoffes,
- eine Kühlvorrichtung (300) zur Kühlung des flüssigen Braustoffes, aufweisend:
• ein Kühlaggregat (310) zum Kühlen eines Kältemittels,
• einen Durchlaufkühler (320) zur Kühlung des flüssigen Braustoffes in dem Flüssigkeitstank (200) mittels des gekühlten Kältemittels, und
• Kältemittelleitungen aufweisend
∘ eine Eingangsleitung (331) mit einem ersten Anschlussabschnitt (341) zum Anschließen einer Leitung zum Leiten von Kältemittel in das Kühlaggregat (310),
∘ eine Kälteleitung (332) zum Leiten des gekühlten Kältemittels vom Kühlaggregat (310) zum Durchlaufkühler (320), und
∘ einer Ausgangsleitung (333) mit einem zweiten Anschlussabschnitt (343) zum Anschließen einer Leitung zum Abführen des Kältemittels von dem Durchlaufkühler (320),
wobei der Flüssigkeitstank (200) und die Kühlvorrichtung (300) als eine zusammenhängende, transportable Einheit bereitgestellt sind.

2. Brauvorrichtung (100) gemäß Anspruch 1, wobei die Kälteleitung (332) einen dritten Anschlussabschnitt (342) zum Anschließen einer Leitung zum Verbinden mit Kältemittelleitungen weiterer Brauvorrichtungen (100) zu einem Kältenetzwerk aufweist.

3. Brauvorrichtung (100) gemäß einem der vorhergehenden Ansprüche, wobei der erste Anschlussabschnitt (341), der zweite Anschlussabschnitt (343) und/oder der dritte Anschlussabschnitt (342) eine Schnellkupplung zum Anschließen der jeweiligen Leitung aufweist, vorzugsweise ein Anschlussventil, besonders bevorzugt ein steuerbares Anschlussventil.

4. Brauvorrichtung (100) gemäß einem der vorhergehenden Ansprüche, wobei die Kälteleitung (332) ein Steuerventil (350) zur Steuerung der Menge des vom Kühlaggregat (310) zum Durchlaufkühler (320) geleiteten Kühlmittels aufweist.

5. Brauvorrichtung (100) gemäß einem der vorhergehenden Ansprüche, ferner aufweisend einen Träger (220) zum Tragen des Flüssigkeitstanks (200) und vorzugsweise ferner zum Tragen der Kühlvorrichtung (300).

6. Brauvorrichtung (100) gemäß einem der vorhergehenden Ansprüche, wobei das Kühlaggregat (310) relativ zum Flüssigkeitstank (200) fix vorgesehen ist, vorzugsweise unmittelbar an dem Flüssigkeitstank (200) oder an dem Träger (220) befestigt ist, und/oder
wobei das Kühlaggregat (310) einen Ventilator zur Kühlung des Kühlaggregats (310) aufweist.

7. Brauvorrichtung (100) gemäß einem der vorhergehenden Ansprüche, wobei das Kühlaggregat (310) aufweist
• einen Kältemittelkompressor (310a) zum Komprimieren des Kältemittels,
• einen Kühlkondensator (310c) zum Kühlen des komprimierten Kältemittels, und
• ein Entspannungsventil (310e) zum Entspannen und somit weiteren Kühlen des durch den Kühlkondensator (310c) gekühlten Kältemittels,
• wobei vorzugsweise zwischen dem Kältemittelkompressor (310a) und dem Kühlkondensator (310c) eine Ausleitleitung (831) mit einem vierten Anschlussabschnitt (841) zum Anschließen einer Leitung zum Ausleiten wenigstens eines Teils des Kältemittels aus dem Kühlaggregat (310) vorgesehen ist, und
• wobei vorzugsweise zwischen dem Kühlkondensator (310c) und dem Entspannungsventil (310e) eine Einleitleitung (832) mit einem fünften Anschlussabschnitt (842) zum Anschließen einer Leitung zum Einleiten des von dem über die Ausleitleitung (831) ausgeleiteten Kältemittels in das Kühlaggregat (310) vorgesehen ist.

8. Brauvorrichtung (100) gemäß einem der vorhergehenden Ansprüche, wobei der Durchlaufkühler (320) direkt thermisch mit dem Flüssigkeitstank (200) gekoppelt ist, vorzugsweise direkt an oder in einer Außenwand (210, 211) des Flüssigkeitstanks (200) vorgesehen ist, und/oder
wobei der Durchlaufkühler (320) als Kühltasche ausgebildet ist, welche den Flüssigkeitstank (200) wenigstens teilweise flächig kontaktierend umgibt.

9. Brauvorrichtung (100) gemäß einem der vorhergehenden Ansprüche, wobei der Flüssigkeitstank (200) ein Volumen im Bereich von 0,1 m³ (100l) bis 1000 m³ (1 000 000l) aufweist.

10. Brausystem (400) zum Gären eines flüssigen Braustoffes, aufweisend
wenigstens zwei Brauvorrichtungen (100) gemäß einem der vorhergehenden Ansprüche, und
eine Verbindungsleitung (501) zum Verbinden aller Ausgangsleitungen (333) über deren zweite Anschlussabschnitte (343) mit allen Eingangsleitungen (331) über deren erste Anschlussabschnitte (341) zum Zurückführen des Kältemittels in die Kühlaggregate (310).

11. Brausystem (400) gemäß dem vorhergehenden Anspruch 10, ferner aufweisend eine weitere Verbindungsleitung (502) zum Verbinden der Kälteleitungen (332) wenigstens zweier Brauvorrichtungen (100) zu einem Kältenetzwerk, bevorzugt über deren dritte Anschlussabschnitte (342),
wobei vorzugsweise die weitere Verbindungsleitung (502) Leitungsabschnitte aufweist, die durch Ventile oder Drosseln verbunden sind, um das Kältenetzwerk wahlweise in funktionale Abschnitte trennen zu können.

12. Brausystem (400) gemäß einem der vorhergehenden Ansprüchen 10 bis 11, ferner aufweisend ein weiteres zu kühlendes Element (600), wie beispielsweise einen Würzekühler, wobei das Element (600) eine weitere Eingangsleitung (631) bevorzugt mit einem sechsten Anschlussabschnitt (641) zum Anschließen einer Leitung, insbesondere der weiteren Verbindungsleitung (502), zum Leiten von Kältemittel in das Element (600), sowie eine weitere Ausgangsleitung (633) bevorzugt mit einem siebten Anschlussabschnitt (643) zum Anschließen einer Leitung, insbesondere der einen Verbindungsleitung (501), zum Abführen des Kältemittels von dem Element (600) aufweist.

13. Brausystem (400) gemäß einem der vorhergehenden Ansprüchen 10 bis 12, wobei die eine Verbindungsleitung (501) und/oder die weitere Verbindungsleitung (502) Schnellkupplungen, vorzugsweise Anschlussventile und insbesondere steuerbare Anschlussventile, zum Anschließen an entsprechende der Anschlussabschnitte aufweist.

14. Brausystem (400) gemäß einem der vorhergehenden Ansprüchen 10 bis 13, ferner aufweisend
eine Wärmetauscherleitung (801) zum Verbinden aller Ausleitleitungen (831) über deren vierte Anschlussabschnitte (841) mit allen Einleitleitungen (832) über deren fünfte Anschlussabschnitte (842) zum Umleiten wenigstens eines Teils des Kältemittels bezüglich der Kühlaggregate (310),
wobei die Wärmetauscherleitung (801) durch einen Wärmetauscher (701) zum Kühlen des Kältemittels geführt ist,
wobei vorzugsweise der Wärmetauscher (701) räumlich getrennt von den wenigstens zwei Brauvorrichtungen (100) angeordnet ist, und
wobei der Wärmetauscher (701) weiter bevorzugt eine Wärmeabführvorrichtung (702) zur Abführung der im Wärmetauscher (701) bei der Kühlung des Kältemittels entstandenen Wärme aufweist.

15. Brausystem (400) gemäß einem der vorhergehenden Ansprüchen 10 bis 14, ferner aufweisend
• eine Messstelle, beispielsweise eine Druckmessstelle, und/oder eine Regelstelle, wie zum Beispiel eine verstellbare Drossel, und/oder
• eine Mess- und Regelungseinheit zur bevorzugt automatisierten Steuerung des Brausystems (400), insbesondere der steuerbaren Anschlussventile und/oder Steuerventile (350) und/oder Ventile und/oder Drosseln, für den Gär- und Kühlprozess.

## Claims

1. Brewing device (100) for fermenting a liquid brewing material comprising:
- a liquid tank (200), in particular a fermentation tank, for receiving the liquid brewing material,
- a cooling device (300) for cooling the liquid brewing material comprising:
• a cooling unit (310) for cooling a refrigerant,
• a continuous-flow cooler (320) for cooling the liquid brewing material in the liquid tank (200) by means of the cooled refrigerant, and
• refrigerant pipes comprising:
^{∗} an entry pipe (331) having a first connection section (341) for connecting a pipe for guiding refrigerant to the cooling unit (310),
^{∗} a cooling pipe (332) for guiding the cooled refrigerant from the cooling unit (310) to the continuous-flow cooler (320) and
^{∗} an exit pipe (333) having a second connection section (343) for connecting a pipe for exhausting the refrigerant from the continuous-flow cooler (320),
wherein the liquid tank (200) and the cooling device (300) are provided as a connected transportable unit.

2. Brewing device (100) according to claim 1, wherein the cooling pipe (332) comprises a third connection section (342) for connecting a pipe for connecting refrigerant pipes of other brewing devices (100) to a refrigerant network.

3. Brewing device (100) according to any of the previous claims, wherein the first connection section (341), the second connection section (343) and/or the third connection section (342) comprise a quick-release coupling for connecting the respective pipe, preferably a connection valve, more preferably a controllable connection valve.

4. Brewing device (100) according to any of the previous claims, wherein the cooling pipe (332) comprises a control valve (350) for controlling the amount of the refrigerant guided from the cooling unit (310) to the continuous-flow cooler (320).

5. Brewing device (100) according to any of the previous claims, further comprising a carrier (220) for carrying the liquid tank (200) and preferably further for carrying the cooling device (300).

6. Brewing device (100) according to any of the previous claims, wherein the cooling unit (310) is provided fixed in respect to the liquid tank (200), preferably directly attached to the liquid tank (200) or to the carrier (220), and/or
wherein the cooling unit (310) comprises a fan for cooling the cooling unit (310).

7. Brewing device (100) according to any of the previous claims, wherein the cooling unit (310) comprises
• a refrigerant compressor (310a) for compressing the refrigerant,
• a cooling condenser (310c) for cooling the compressed refrigerant, and
• an expansion valve (310e) for expanding and thus, further cooling the refrigerant cooled by the cooling condenser (310c),
• wherein there is preferably provided a discharge pipe (831) having a fourth connection section (841) for connecting a pipe for discharging at least a part of the refrigerant from the cooling unit (310) between the refrigerant compressor (310a) and the discharge pipe (831), and
• wherein there is preferably provided an inlet pipe (832) having a fifth connection section (842) for connecting a pipe for introducing the refrigerant discharged through the discharge pipe (831) to the cooling unit (310) between the cooling condenser (310c) and the expansion valve (310e).

8. Brewing device (100) according to any of the previous claims, wherein the continuous-flow cooler (320) is coupled directly thermally to the liquid tank (200), preferably provided directly at or in an exterior wall (210, 211) of the liquid tank (200), and/or wherein the continuous-flow cooler (320) is formed as a cool bag that surrounds the liquid tank (200) in an at least partially surface-contact manner.

9. Brewing device (100) according to any of the previous claims, wherein the liquid tank (200) has a volume in the range from 0.1 m³ (100 1) to 1000 m³ (1 000 000 1).

10. Brewing system (400) for fermenting a liquid brewing material comprising
at least two brewing devices (100) according to any of the previous claims, and
a connection pipe (501) for connecting all exit pipes (333) by means of their second connection sections (343) to all entry pipes (331) by means of their first connection sections (341) for returning the refrigerant to the cooling units (310).

11. Brewing system (400) according to the previous claim 10, further comprising an additional connection pipe (502) for connecting the cooling pipes (332) of at least two brewing devices (100) to a refrigerant network preferably using their third connection sections (342),
wherein the additional connection pipe (502) preferably comprises pipe sections connected through valves or throttles in order to be able to selectively separate the refrigerant network into functional sections.

12. Brewing system (400) according to any of the previous claims 10 to 11, further comprising a further element (600) to be cooled, such as a spice cooler, the element (600) comprising an additional entry pipe (631) preferably having a sixth connection section (641) for connecting a pipe, in particular the additional connection pipe (502) for guiding refrigerant into the element (600) as well as an additional exit pipe (663) preferably having a seventh connection section (643) for connecting a pipe, in particular the one connection pipe (501) for discharging the refrigerant from the element (600).

13. Brewing system (400) according to any of the previous claims 10 to 12, wherein the connection pipe (501) and/or the additional connection pipe (502) comprise quick-release couplings, preferably connection valves and in particular controllable connection valves, for connecting to respective connection sections.

14. Brewing system (400) according to any of the previous claims 10 to 13, further comprising
a heat exchanger pipe (801) for connecting all discharge pipes (831) through their fourth connection sections (841) to all inlet pipes (832) through their fifth connection sections (842) for redirecting at least part of the refrigerant in respect to the cooling units (310), wherein the heat exchanger pipe (801) is passed through a heat exchanger (701) for cooling the refrigerant,
wherein the heat exchanger (701) is preferably arranged spatially separated from the at least two brewing devices (100), and
the heat exchanger (701) preferably further comprising a heat dissipation device (702) for dissipating the heat generated in the heat exchanger (701) while cooling the refrigerant.

15. Brewing system (400) according to any of the previous claims 10 to 14, further comprising
• a measuring point, for example a pressure measuring point, and/or a control point, such as an adjustable throttle, for example, and/or
• a measuring and control unit for preferably automatically controlling the brewing system (400), in particular the controllable connection valves and/or control valves (350) and/or valves and/or throttles, for the fermentation and cooling process.

## Revendications

1. Dispositif de brassage (100) pour la fermentation d'une matière à brasser liquide, présentant
- un réservoir à liquide (200), en particulier un réservoir de fermentation, pour recevoir la matière à brasser liquide,
- un dispositif de refroidissement (300) pour le refroidissement de la matière à brasser liquide, présentant :
--un groupe de refroidissement (310) pour le refroidissement d'un réfrigérant,
--un refroidisseur continu (320) pour le refroidissement de la matière à brasser liquide dans le réservoir à liquide (200) au moyen du réfrigérant refroidi, et
-- des conduites de réfrigérant présentant
--- une conduite d'entrée (331) avec une première section de raccordement (341) pour le raccordement d'une conduite, destinée à acheminer du réfrigérant dans le groupe de refroidissement (310),
--- une conduite de froid (332) destinée à acheminer le réfrigérant refroidi depuis le groupe de refroidissement (310) vers le refroidisseur continu (320), et
--- une conduite de sortie (333) avec une deuxième section de raccordement (343) pour le raccordement d'une conduite destinée à évacuer le réfrigérant du refroidisseur continu (320),
dans lequel le réservoir à liquide (200) et le dispositif de refroidissement (300) sont fournis en tant qu'une unité transportable solidaire.

2. Dispositif de brassage (100) selon la revendication 1, dans lequel la conduite de froid (332) présente une troisième section de raccordement (342) pour le raccordement d'une conduite destinée à être reliée à des conduites de réfrigérant d'autres dispositifs de brassage (100) en un réseau de froid.

3. Dispositif de brassage (100) selon l'une quelconque des revendications précédentes, dans lequel la première section de raccordement (341), la deuxième section de raccordement (343) et/ou la troisième section de raccordement (342) présentent un système de couplage rapide pour le raccordement de la conduite respective, de préférence une soupape de raccordement, de manière particulièrement préférée une soupape de raccordement pouvant être commandée.

4. Dispositif de brassage (100) selon l'une quelconque des revendications précédentes, dans lequel la conduite de froid (332) présente une soupape de commande (350) pour la commande de la quantité du réfrigérant acheminé depuis le groupe de refroidissement (310) vers le refroidisseur continu (320).

5. Dispositif de brassage (100) selon l'une quelconque des revendications précédentes, présentant en outre un support (220) pour le support du réservoir à liquide (200) et de préférence en outre pour le support du dispositif de refroidissement (300).

6. Dispositif de brassage (100) selon l'une quelconque des revendications précédentes, dans lequel le groupe de refroidissement (310) est prévu de manière fixe par rapport au réservoir à liquide (200), de préférence est fixé directement sur le réservoir à liquide (200) ou sur le support (220), et/ou
dans lequel le groupe de refroidissement (310) présente un ventilateur pour le refroidissement du groupe de refroidissement (310).

7. Dispositif de brassage (100) selon l'une quelconque des revendications précédentes, dans lequel le groupe de refroidissement (310) présente
- un compresseur de réfrigérant (310a) pour la compression du réfrigérant,
- un condensateur de refroidissement (310c) pour le refroidissement du réfrigérant comprimé, et
- une soupape de détente (310e) pour la détente et ainsi la poursuite du refroidissement du réfrigérant refroidi par le condensateur de refroidissement (310c),
- dans lequel de préférence une conduite d'évacuation (831) avec une quatrième section de raccordement (841) pour le raccordement d'une conduite destinée à évacuer au moins une partie du réfrigérant hors du groupe de refroidissement (310) est prévue de préférence entre le compresseur de réfrigérant (310a) et le condensateur de refroidissement (310c), et
- dans lequel une conduite d'introduction (832) avec une cinquième section de raccordement (842) pour le raccordement d'une conduite destinée à introduire le réfrigérant évacué par l'intermédiaire de la conduite d'évacuation (831) dans le groupe de refroidissement (310) est prévue de préférence entre le condensateur de refroidissement (310c) et la soupape de détente (310e).

8. Dispositif de brassage (100) selon l'une quelconque des revendications précédentes, dans lequel le refroidisseur continu (320) est couplé directement de manière thermique au réservoir à liquide (200), de préférence est prévu directement sur ou dans une paroi extérieure (210, 211) du réservoir à liquide (200), et/ou
dans lequel le refroidisseur continu (320) est réalisé en tant que compartiment de refroidissement, lequel entoure avec un contact au moins en partie à plat le réservoir à liquide (200).

9. Dispositif de brassage (100) selon l'une quelconque des revendications précédentes, dans lequel le réservoir à liquide (200) présente un volume dans la plage de 0,1 m³ (100 I) à 1000 m³ (1 000 000 I).

10. Système de brassage (400) pour la fermentation d'une matière à brasser liquide, présentant
au moins deux dispositifs de brassage (100) selon l'une quelconque des revendications précédentes, et
une conduite de liaison (501) destinée à relier toutes les conduites de sortie (333) par l'intermédiaire de leurs deuxièmes sections de raccordement (343) à toutes les conduites d'entrée (331) par l'intermédiaire de leurs premières sections de raccordement (341) pour ramener le réfrigérant dans les groupes de refroidissement (310).

11. Système de brassage (400) selon la revendication précédente 10, présentant en outre une autre conduite de liaison (502) destinée à relier les conduites de froid (332) d'au moins deux dispositifs de brassage (100) en un réseau de froid, de manière préférée par l'intermédiaire de leurs troisièmes sections de raccordement (342),
dans lequel de préférence l'autre conduite de liaison (502) présente des sections de conduite, qui sont reliées par des soupapes ou des papillons d'étranglement pour pouvoir séparer le réseau de froid au choix en sections fonctionnelles.

12. Système de brassage (400) selon l'une quelconque des revendications précédentes 10 à 11, présentant en outre un autre élément (600) à refroidir, comme un refroidisseur de moût, dans lequel l'élément (600) présente une autre conduite d'entrée (631) de manière préférée avec une sixième section de raccordement (641) pour le raccordement d'une conduite, en particulier de l'autre conduite de liaison (502), destinée à acheminer du réfrigérant dans l'élément (600), ainsi qu'une autre conduite de sortie (633) de manière préférée avec une septième section de raccordement (643) pour le raccordement d'une conduite, en particulier d'une conduite de liaison (501), destinée à évacuer le réfrigérant de l'élément (600).

13. Système de brassage (400) selon l'une quelconque des revendications précédentes 10 à 12, dans lequel une conduite de liaison (501) et/ou l'autre conduite de liaison (502) présentent des systèmes de couplage rapide, de préférence des soupapes de raccordement et en particulier des soupapes de raccordement pouvant être commandées, pour le raccordement à des sections correspondantes des sections de raccordement.

14. Système de brassage (400) selon l'une quelconque des revendications 10 à 13, présentant en outre
une conduite d'échangeur de chaleur (801) pour relier toutes les conduites d'évacuation (831) par l'intermédiaire de leurs quatrièmes sections de raccordement (841) à toutes les conduites d'introduction (832) par l'intermédiaire de leurs cinquièmes sections de raccordement (842) pour dévier au moins une partie du réfrigérant par rapport aux groupes de refroidissement (310),
dans lequel la conduite d'échangeur de chaleur (801) est guidée à travers un échangeur de chaleur (701) pour le refroidissement du réfrigérant,
dans lequel de préférence l'échangeur de chaleur (701) est disposé de manière séparée spatialement des au moins deux dispositifs de brassage (100), et
dans lequel l'échangeur de chaleur (701) présente par ailleurs de manière préférée un dispositif d'évacuation de chaleur (702) pour évacuer la chaleur produite dans l'échangeur de chaleur (701) lors du refroidissement du réfrigérant.

15. Système de brassage (400) selon l'une quelconque des revendications précédentes 10 à 14, présentant en outre
- un point de mesure, par exemple un point de mesure de pression, et/ou un point de réglage, par exemple un papillon d'étranglement ajustable, et/ou
- une unité de mesure et de régulation pour la commande de manière préférée automatisée du système de brassage (400), en particulier des soupapes de raccordement pouvant être commandées et/ou des soupapes de commande (350) et/ou des soupapes et/ou des papillons d'étranglement, pour le processus de fermentation et de refroidissement.
